# EUROPÄISCHE PATENTSCHRIFT

(11) **EP 0 796 754 B1**
(45) Veröffentlichungstag und Bekanntmachung des Hinweises auf die Patenterteilung: **19.01.2000**
(21) Anmeldenummer: 97104036.5
(22) Anmeldetag: 11.03.1997
(51) Int. Cl.: B60K 15/05, B60K 15/04

(54) **Vorrichtung zum Abdecken des Tankstutzens an Kraftfahrzeugen mittels Tankklappe**
Device to cover the fuel filler for vehicles by a tank flap
Dispositif pour couvrir la tubulure de remplissage avec une trappe d'obturation

(30) Priorität: 21.03.1996 DE 29605297 U
(43) Veröffentlichungstag der Anmeldung: 24.09.1997
(73) Patentinhaber: Mittelhäuser, Bernhard, D-30900 Wedemark (DE)
(72) Erfinder: Jenssen, Thomas, 30900 Wedemark (DE)
(74) Vertreter: Depmeyer, Lothar

(56) Entgegenhaltungen:
- EP-A- 0 760 306
- DE-A- 4 423 914
- DE-A- 19 511 102

## Beschreibung

Die Erfindung betrifft eine Vorrichtung zum Abdecken des Tankstutzens mittels Tankklappe, die einen bogenförmigen Schwenkarm aufweist, der durch ein Zapfengelenk am Fahrzeug gehalten ist.

Die Erfindung geht weiterhin von solchen Vorrichtungen aus, bei denen die Gelenkteile und/oder die benachbarten Konstruktionsteile geringfügig elastisch verformbar sind und bei der Montage der Tankklappe das Gelenk durch Einspringen seiner Teile gebildet ist. Eine solche Tankklappe, die dem Oberbegriff des Anspruchs 1 entspricht, ist beispielsweise aus dem Dokument DE-A-195 11 102 bekannt.

Es ist bekannt, bei der Montage der Tankklappe zangenförmige Werkzeuge zu benutzen, um das die Tankklappe haltende Gelenk zu bilden. Diese Werkzeuge sind erforderlich, weil sich das Gelenk seitlich neben dem Tankstutzen verdeckt unter der Haut des Fahrzeuges befindet.

Aufgabe der Erfindung ist es, die eingangs erwähnte Vorrichtung so auszubilden, dass eine Montage der Tankklappe von Hand, und zwar ohne Werkzeuge erfolgen kann.

Zur Lösung dieser Aufgabe ist erfindungsgemäss unterhalb des bogenförmigen Schwenkarmes ein Widerlager vorgesehen, das dem Schwenkarm zur Montage der Tankklappe für eine Kantbewegung als Abstützung dient und im Betriebszustand des Klappgelenks im Abstand vom Schwenkarm angeordnet ist.

Demgemäss erfolgt das Zusammenfügen der Gelenkteile durch eine Klapp- oder Kantbewegung im Sinne einer normalen Schwenkbewegung der Tankklappe; damit hierbei jedoch ein Zusammenführen der Gelenkteile durch geringfügige elastische Verformung der Gelenkteile und/oder der benachbarten Elemente der Vorrichtung (Fahrzeugbestandteile) durch Einspringen oder Einschnappen vollzogen werden kann, erfolgt dabei eine Abstützung des Schwenkarmes auf dem Widerlager, um so eine Kant- bzw. Schwenkbewegung ausführen zu können.

Weitere Einzelheiten der Erfindung werden anhand der Zeichnung erläutert, in der ein Ausführungsbeispiel der Erfindung dargestellt ist. Es zeigen :
Fig. 1 einen Teilschnitt durch ein Kraftfahrzeug im Bereich seines Tankstutzens und der dort befindlichen, montierten, geschlossenen Tankklappe,
Fig. 2 Teile aus Fig. 1 mit einem noch nicht zusammengesetzten Klappgelenk und
Fig. 3 einen Schnitt nach der Linie III - III von Fig. 1.

Innerhalb eines etwa trichterförmigen Gehäuses 1 befindet sich der nicht dargestellte Tankstutzen mit der Verschlussklappe. Die diesen Stutzen abdeckende Tankklappe 2 schliesst aussen mit der Aussenhaut 3 des Fahrzeuges bündig ab. Um den Tankstutzen erreichen zu können, wird die Tankklappe 2 im Sinne des Pfeiles 4 aufgeklappt; hierbei sind Schwenkwege von etwa 90° möglich.

Die Anlenkung der Tankklappe 2 erfolgt durch einen Schwenkarm 5, der in etwa J-förmig gestaltet und mit dem etwa senkrecht zur Tankklappe 2 gerichteten Schenkel 6 an der Unterseite der Tankklappe 2 befestigt ist. Am freien Ende des Schwenkarmes 5 befindet sich auf jeder Seite ein querab stehender Zapfen 7. Die so vorhandenen beiden Zapfen 7 fluchten und greifen in zwei Sacklöcher 8 ein, die sich in einer seitlichen Ausnehmung 9 des Gehäuses 1 an den beiden Seitenwänden dieser Ausnehmung befinden, und zwar in einem verdickten Randbereich 10, der stufenartig geformt ist. Der Stufenabsatz ist mit 11 bezeichnet.

Um die Tankklappe 2 montieren zu können, ist der Grund der Ausnehmung 9 besonders ausgebildet. Er ist geringfügig konkav ausgeführt und relativ nahe am unten gelegenen Bogenbereich 13 des Schwenkarmes 6 angeordnet. Der dort vorhandene Abtand ist mit x bezeichnet. Er ist gerade noch so gross, dass eine ungehinderte Verschwenkung der Tankklappe 2 stattfinden kann; andererseits dient der Grund als Widerlager 12, wenn die Tankklappe 2 montiert werden soll.

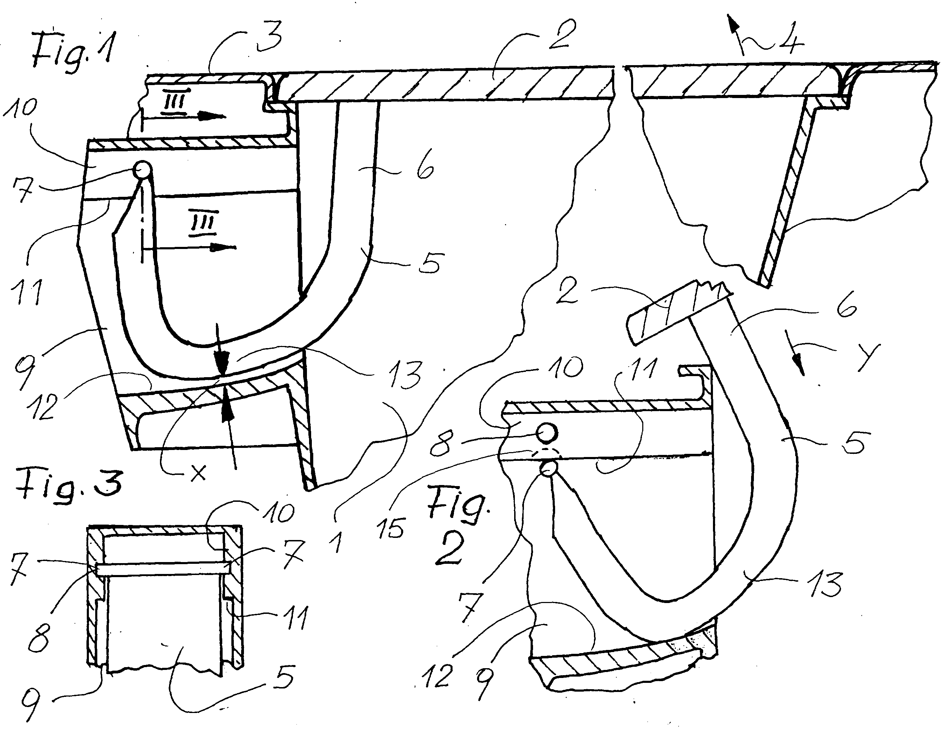

Im leicht hochgeschwenktem Zustand der Tankklappe 2 (vgl. Fig 2) wird der Bogenbereich 13 auf das Widerlager 12 aufgesetzt, wobei die beiden Zapfen 7 den Stufenabsatz 11 unterfassen. Durch einen Druck von Hand in Richtung des Pfeiles y, also im Sinne einer Verschwenkung bzw. Verkantung der Tankklappe 2 ( Schliessbewegung) verformen sich die Seitenwände der Ausnehmung 9 und/oder die Zapfen 7 bzw. die angrenzenden Teile des Schwenkarmes 5. Alsdann springen die beiden Zapfen 7 in die Sacklöcher 8 ein, wobei sich das Zapfengelenk bildet. Mit der Bildung des Gelenks tritt eine Zurückverformung der aus zähhartem Kunststoff bestehenden Teile 1 und 5 ein. Damit ist das Gelenk fertiggestellt, und die Montage der Tankklappe 2 vollzogen werden.

Es sei erwähnt, dass die konkave Gestaltung des Widerlagers 12 besonders vorteilhaft ist, insb. weil der dem freien Ende der Tankklappe 2 zugekehrte Teil des Widerlagers höher angeordnet ist in Bezug auf die durch die Tankklappe 2 bestimmte Ebene. Dies verhindert eine Abrutschbewegung bzw. eine Ausweichbewegung der Krümmung 13 insb. nach hinten, wenn die Manipulation gemäss Fig. 2 vollzogen wird. Ferner ist es vorteilhaft, wenn der Stufenabsatz 11 dem Sackloch 8 benachbart noch eine kleine Kerbe 15 erhält. Der Monteur findet dann sofort die richtige Stellung der Zapfen 7, wenn der Schwenkarm 5 zur Montage angesetzt werden soll.

Unterhalb des Randbereiches 10 sind die Seitenwände der Ausnehmung so weit voneinander entfernt, dass zunächst der Schwenkarm 5 ungehindert in die Ausnehmung 9 eingeführt werden kann. Mit der in Fig. 2 wiedergegebenen Stellung kann dann die Montagephase beginnen.

## Patentansprüche

1. Vorrichtung zum Abdecken des Tankstutzens an Kraftfahrzeugen mittels Tankklappe (2), die einen bogenförmigen Schwenkarm (5) aufweist, der durch ein Zapfengelenk (7,8) am Fahrzeug gehalten ist, dadurch gekennzeichnet, dass unterhalb des Schwenkarmes (5) ein Widerlager (12) vorgesehen ist, das dem Schwenkarm (5) zur Montage der Tankklappe (2) für eine Kantbewegung zur Bildung des Zapfengelenks (7,8) als Abstützung dient und im Betriebszustand des Zapfengelenks (7,8) im Abstand (x) vom Schwenkarm (5) angeordnet ist.

2. Vorrichtung nach Anspruch 1, dadurch gekennzeichnet, dass das Widerlager (12) vom Grund einer Ausnehmung (9) eines Gehäuses (1) gebildet ist, das den Tankstutzen aufnimmt, wobei in die Ausnehmung (9) der Schwenkarm (5) hineinragt.

3. Vorrichtung nach Anspruch 1, dadurch gekennzeichnet, dass das Widerlager (12) konkav gestaltet ist.

4. Vorrichtung nach Anspruch 1 und 2, dadurch gekennzeichnet, dass das Widerlager (12) in dem dem freien Ende der geschlossenen Tankklappe (2) zugekehrten Abschnitt der durch die Tankklappe (2) bestimmten Ebene näher liegt im Vergleich zu dem dem freien Ende abgekehrten Abschnitt des Widerlagers.

5. Vorrichtung nach Anspruch 2, dadurch gekennzeichnet, dass sich das Zapfengelenk (7,8) in einem verengten Abschnitt (10) der Ausnehmung (9) befindet.

6. Vorrichtung nach Anspruch 5, dadurch gekennzeichnet, dass sich in dem durch die Verengung gebildeten Stufenabsatz (11) eine Kerbe (15) od. dgl. zur Aufnahme der am Schwenkarm (5) befindlichen Zapfen (7) befindet.

7. Vorrichtung nach Anspruch 1, dadurch gekennzeichnet, dass sich zwischen dem Schwenkarm (5) und dem Widerlager (12) nur ein kleiner Spalt (x) befindet.

## Claims

1. Device for covering the tank filler neck for automotive vehicles by means of tank flap (2), which has an arcuate pivotal arm (5) retained on the vehicle by a pin-type pivot (7,8), characterised in that a support member (12) is provided beneath the pivotal arm (5), which support member serves as a supporting means for the pivotal arm (5) for the mounting of the tank flap (2) for a tilting movement to form the pin-type pivot (7,8) and is disposed at a spacing (x) from the pivotal arm (5) when the pin-type pivot (7,8) is in its operative position.

2. Device according to claim 1, characterised in that the support member (12) is formed by the base of a recess (9) in a housing (1), which accommodates the tank filler neck, the pivotal arm (5) protruding into the recess (9).

3. Device according to claim 1, characterised in that the support member (12) has a concave configuration.

4. Device according to claims 1 and 2, characterised in that the support member (12) in the portion facing the free end of the closed tank flap (2) is situated closer to the plane, determined by the tank flap (2), than the portion of the support member remote from the free end of said closed tank flap.

5. Device according to claim 2, characterised in that the pin-type pivot (7,8) is situated in a constricted portion (10) of the recess (9).

6. Device according to claim 5, characterised in that a notch (15) or the like is situated in the stepped shoulder portion (11), which is formed by the constriction, for accommodating the pins (7) situated on the pivotal arm (5).

7. Device according to claim 1, characterised in that there is only a small gap (x) between the pivotal arm (5) and the support member (12).

## Revendications

1. Dispositif de recouvrement de la tubulure du réservoir d'un véhicule automobile au moyen d'un volet (2) qui comporte un bras (5) basculant en forme d'arceau maintenu sur le véhicule par une articulation (7, 8) à tourillon, caractérisé en ce qu'il est prévu en-dessous du bras (5) basculant une butée (12), qui sert d'appui au bras (5) basculant pour le montage du volet (2) pour un mouvement de coincement destiné à former l'articulation (7, 8) à tourillon et à l'état de fonctionnement qui est disposé à distance (x) du bras (5) oscillant, quand l'articulation (7,8) à tourillon est à l'état de fonctionnement.

2. Dispositif suivant la revendication 1, caractérisé en ce que la butée (12) est formée par le fond d'un évidement (9) d'une enveloppe (1) qui reçoit la tubulure du réservoir, le bras (5) basculant pénétrant dans l'évidement (9).

3. Dispositif suivant la revendication 1, caractérisé en ce que la butée (12) est concave.

4. Dispositif suivant la revendication 1 ou 2, caractérisé en ce que la partie de la butée (12), qui est tournée vers l'extrémité libre du volet (2) fermé, est plus près de la partie du plan déterminé par le volet (2) que ne l'est la partie de la butée, qui est éloignée de l'extrémité libre.

5. Dispositif suivant la revendication 2, caractérisé en ce que l'articulation (7,8) à tourillon se trouve dans une partie (10) rétrécie de l'évidement (9).

6. Dispositif suivant la revendication 5, caractérisé en ce que dans l'épaulement (11) formé par la partie rétrécie se trouve une rainure (15) ou analogue de réception du tourillon (7) se trouvant sur le bras (5) basculant.

7. Dispositif suivant la revendication 1, caractérisé en ce qu'il n'y a qu'un petit intervalle (x) entre le bras (5) basculant et la butée (2).
